# EUROPÄISCHE PATENTSCHRIFT

(11) **EP 1 445 443 B1**
(45) Veröffentlichungstag und Bekanntmachung des Hinweises auf die Patenterteilung: **06.01.2010**
(21) Anmeldenummer: 04405068.0
(22) Anmeldetag: 03.02.2004
(51) Int. Cl.: F01N 3/28, F01N 3/021, B01J 35/04

(54) **Verfahren und Vorrichtung zur Herstellung eines Abgaskatalysators oder Diesel-Partikelfilters**
Process and apparatus for making an exhaust gas catalyst or diesel particle filter
Procédé et dispositif pour la fabrication d'un catalyseur pour purifier le gaz d'échappement ou d'un filtre à particules diesel

(30) Priorität: 07.02.2003 CH 188032003
(43) Veröffentlichungstag der Anmeldung: 11.08.2004
(73) Patentinhaber: SCAMBIA Industrial Developments Aktiengesellschaft, 9494 Schaan (LI)
(72) Erfinder: Stuer, Willem Denis Maria, 8301 Knokke-Heist (BE)
(74) Vertreter: Bohest AG

(56) Entgegenhaltungen:
- EP-A- 0 982 480
- DE-A- 19 711 789
- US-A- 6 000 131
- PATENT ABSTRACTS OF JAPAN Bd. 015, Nr. 038 (C-0800), 30. Januar 1991 (1991-01-30) & JP 02 273548 A (SHOWA AIRCRAFT IND CO LTD), 8. November 1990 (1990-11-08)

## Beschreibung

Abgaskatalysatoren sind speziell für die Automobilindustrie unverzichtbar geworden. Sie umfassen typischerweise ein Gehäuse, in welchem ein Katalysatorkörper - hierbei handelt es sich in der Regel um ein Keramiksubstrat - angeordnet ist. Um den Katalysatorkörper herum ist eine Montagematte (z.B. eine Intumeszenzmatte) gelegt, die den Katalysatorkörper umgibt, sodass der Spalt zwischen dem Katalysatorkörper und dem Gehäuse von der Montagematte ausgefüllt wird. Das Gehäuse kann dabei aus einem Rohr hergestellt sein, es kann aber beispielsweise auch aus mehreren Gehäuseteilen hergestellt werden, die nach dem Einbringen des von der Montagematte umgebenen Katalysatorkörpers miteinander verbunden werden, z.B. durch Schweissen oder durch eine mechanische Verbindung.

Ähnlich aufgebaut wie die zuvor beschriebenen Abgaskatalysatoren sind Diesel-Partikelfilter, welche die Aufgabe haben, allfällige im Abgasstrom noch enthaltene Russpartikel aus dem Abgasstrom herauszufiltern. Sie enthalten entsprechend einen Filterkörper, der ebenfalls in der Regel als Keramiksubstrat ausgebildet ist, und eine Montagematte, welche den Filterkörper umgibt.

Die Funktion der Montagematte besteht darin, den Katalysatorkörper bzw. den Filterkörper an Ort und Stelle im Gehäuse zu halten, und zwar bei verschiedenen Temperaturen und bei unterschiedlichem Lastbetrieb. Der Katalysatorkörper bzw. Filterkörper muss also sowohl bei kalten Temperaturen (also z.B. unmittelbar nach dem Start) als auch bei warmen Temperaturen (also z.B. bei einer längeren Fahrt auf der Autobahn) einerseits sicher an Ort und Stelle gehalten werden, andererseits darf die mechanische Belastung des Katalysatorkörpers bzw. Filterkörpers auch nicht zu gross werden, um Beschädigungen des Katalysatorkörpers zu vermeiden. Bei Verwendung einer Intumeszenzmatte (Quellmatte) als Montagematte muss also die noch nicht aufgequollene Montagematte in der Lage sein, eine Verschiebung des Katalysatorkörpers bzw. Filterkörpers im Gehäuse zu verhindern, während sie bei der Erwärmung aufquillt (und dabei stets in stärkerem Masse aufquillt als sich das Gehäuse bei der Erwärmung dehnt) und einen festeren Sitz des Katalysatorkörpers bzw. Filterkörpers im Gehäuse bewirkt, wobei darauf zu achten ist, dass die Kräfte auf den Katalysatorkörper bzw. Filterkörper nicht so gross werden, dass der Katalysatorkörper bzw. Filterkörper beschädigt wird.

Diese Randbedingungen müssen von einem Abgaskatalysator bzw. Diesel-Partikelfilter über den gesamten Temperatur- und Lastbereich, welchem der Katalysator bzw. Diesel-Partikelfilter ausgesetzt ist, erfüllt werden. Ob die erste Randbedingung von einem einzelnen Abgaskatalysator bzw. Diesel-Partikelfilter auch tatsächlich erfüllt wird, kann beispielsweise derart geprüft werden, dass bei der Herstellung der Abgaskatalysatoren bzw. Diesel-Partikelfilter im kalten Zustand geprüft wird, ob die aus Katalysatorkörper bzw. Filterkörper und Montagematte gebildete Packung nach dem Einbringen in das Gehäuse einer Schwellenkraft standhält, die in axialer Richtung auf die Packung ausgeübt wird. Beim Aufbringen der Schwellenkraft darf sich die Packung nicht im Gehäuse verschieben. Ob die zweite Randbedingung erfüllt wird, kann z.B. durch eine entsprechende Erwärmung des Abgaskatalysators und Aufbringen verschiedener Lasten im Testbetrieb geprüft werden.

Die äusseren Abmessungen von Katalysatorkörpern bzw. Filterkörpern unterliegen bei ihrer Herstellung recht erheblichen Schwankungen. Wie bereits zuvor erwähnt, ist jedoch eine Beschädigung des Katalysatorkörpers (Substrats) bzw. Filterkörpers in jedem Falle zu vermeiden, weil der Katalysatorkörper bzw. Filterkörper die weitaus teuerste Komponente eines Abgaskatalysators bzw. Diesel-Partikelfilters ist. Daher wird bei der Herstellung der Abgaskatalysatoren das Gehäuse entweder aufgeweitet oder geschrumpft, um die jeweils erforderliche Weite des Spalts für die Montagematte zwischen Katalysatorkörper bzw. Filterkörper und Gehäuse zu erreichen. Da das Aufweiten des Gehäuses fertigungstechnisch einfacher ist, wird in den meisten Fällen das Gehäuse so hergestellt, dass der Innenumfang des Gehäuses auf den kleinsten typischerweise auftretenden Aussenumfang der Katalysatorkörper bzw. Filterkörper abgestellt ist, sodass allenfalls eine Aufweitung des Gehäuses zu erfolgen hat. Zu diesem Zweck wird der Aussenumfang jedes einzelnen Katalysatorkörpers bzw. Filterkörpers gemessen und entsprechend diesem Messergebnis ermittelt, ob und gegebenenfalls in welchem Mass eine Aufweitung des Gehäuses zu erfolgen hat.

Diese Vorgehensweise hat allerdings einige Nachteile. So muss beispielsweise das Material, aus welchem das Gehäuse hergestellt wird, das erforderliche Mass an Aufweitung grundsätzlich zulassen, die Streckgrenze des Materials darf dabei nicht überschritten werden. Andererseits erlauben die hierfür verwendeten Materialien in der Regel nur ein bestimmtes Mass an Aufweitung, was dazu führen kann, dass es entweder bei der Herstellung direkt oder während der Lebensdauer der Abgaskatalysatoren bzw. Diesel-Partikelfiltern zu Rissen im Gehäuse kommen kann. Dies ist aber ebenfalls zu vermeiden, weil heute an die Katalysatoren bzw. Partikelfilter der Anspruch gestellt wird, dass sie die Lebensdauer des Motors unbeschadet überstehen.

Ausserdem unterliegt das Aufweiten des Gehäuses auch von der werkzeugtechnischen Seite her gewissen Beschränkungen. So umfassen die Maschinen bzw. Werkzeuge zum Aufweiten einzelne Aufweitsegmente, sodass es beim Aufweiten zu einer ungleichmässigen Aufweitung des Gehäuses und somit zu einem ungleichmässigen Spalt zwischen Katalysatorkörper bzw. Filterkörper und Gehäuse kommen kann.

Schliesslich wird bei bisher bekannten Verfahren der Montagematte praktisch keine wesentliche Beachtung geschenkt. Bei der Verwendung von Intumeszenzmatten als Montagematten werden diese typischerweise als bahnförmiges Material bereit gestellt, welches viele Meter lang ist und auf Rollen aufgewickelt ist von denen jeweils quer zur Längsrichtung der Bahn einzelne Stücke abgetrennt werden, die dann jeweils um den Katalysatorkörper bzw. Filterkörper herum gelegt werden. Dabei wird von einer Homogenität der Montagematte über die gesamte Länge des bahnförmigen Materials hinweg ausgegangen, was allerdings in der Praxis nur wenig zutreffend ist.

DE 197 11 789 A zeigt ein Verfahren, bei welchem ein Blechzuschnitt um einen Abgasreinigungskörper samt Lagerungsmatte herumgelegt wird. Falls der Durchmesser von Abgasreinigungskörper und Lagerungsmatte kleiner als ein vorgesehenes Mindestmass ist, so liegt der Blechzuschnitt auf dem Stützbereich des einen Aussentrichter bildenden Übergangskonus auf. Falls der besagte Durchmesser von Abgasreinigungskörper und Lagerungsmatte allerdings grösser ist als dieses Mindestmass, so entsteht ein radialer Spalt zwischen dem Blechzuschnitt und dem Stützbereich, der aber die Anbringung einer Kehlschweissnaht zum Verbinden von Blechzuschnitt und Übergangskonus nicht in Frage stellt.

EP-A-0 982 480 zeigt ein abgasreinigendes Substrat, welches mittels Lasermessgerät vermessen und anschliessend mit einer Intumeszenzmatte umwickelt wird. Die Packung aus Substrat und Matte wird anschliessend in eine überdimensionierte Dose eingebracht, welche dann anhand der zuvor ermittelten Abmessungen durch Grössenreduktion des Gehäuses durch mechanisches Schrumpfen durch eine Grössenreduzierungsmaschine zusammengedrückt wird, um die Packung aus Substrat und Matte fest zu umschliessen.

In Anbetracht der Nachteile von bisher bekannten Herstellungsverfahren liegt daher der vorliegenden Erfindung die Aufgabe zugrunde, ein verbessertes Herstellungsverfahren für Abgaskatalysatoren bzw. Diesel-Partikelfiltern vorzuschlagen, welches die vorstehend genannten Nachteile nicht aufweist und gleichzeitig vom fertigungstechnischen Aufwand her gering ist.

Diese Aufgabe wird durch das erfindungsgemässe Verfahren, wie es durch die Merkmale des unabhängigen Verfahrensanspruchs charakterisiert ist, gelöst. Vorteilhafte Varianten des erfindungsgemässen Verfahrens ergeben sich aus den Merkmalen der abhängigen Verfahrensansprüche. Die Aufgabe wird apparativ durch eine Vorrichtung gelöst, wie sie durch die Merkmale des unabhängigen Vorrichtungsanspruchs charakterisiert ist. Vorteilhafte Ausführungsbeispiele der erfindungsgemässen Vorrichtung ergeben sich aus den Merkmalen der abhängigen Vorrichtungsansprüche.

Insbesondere werden vor dem Herumlegen der Montagematte (bekannter Dicke) um den Katalysatorkörper bzw. Filterkörper die Abmessungen des Katalysatorkörpers bzw. Filterkörpers ermittelt und aufgrund der ermittelten Abmessungen des Katalysatorkörpers bzw. Filterkörpers wird die Länge festgelegt, auf die das Gehäusematerial zu einem Stück zugeschnitten wird, z.B. ein Blech zu einem Blechstück. Das so zugeschnittene Stück wird zu einem Gehäuse geformt. Entweder wird dann die Packung aus Katalysatorkörper bzw. Filterkörper in das Gehäuse eingebracht und dann wird das Gehäuse verbunden. Oder es wird das Gehäuse verbunden und dann wird die Packung aus Katalysatorkörper bzw. Filterkörper und Montagematte in das Gehäuse eingebracht.

Das Gehäusematerial, also z.B. das Blech, wird in jedem Falle nach der Ermittlung der Abmessungen des Katalysatorkörpers bzw. Filterkörpers genau auf die erforderliche Länge zugeschnitten, sodass das Gehäuse im Endzustand in jedem Fall den erforderlichen Innenumfang aufweist, um die gewünschte Spaltweite zwischen Katalysatorkörper bzw. Filterkörper und Gehäuse zu erreichen.

Dabei ist es sowohl möglich, dass das zugeschnittene Stück zuerst zu einem Gehäuse geformt wird und dann die Packung aus Katalysatorkörper bzw. Filterkörper und Montagematte in das Gehäuse eingebracht wird. Dies beinhaltet auch solche Fälle in denen das Gehäuse quasi vorgeformt wird, die Packung aus Katalysatorkörper bzw. Filterkörper und Montagematte lose eingebracht wird, und dann das Gehäuse in seine Endform geformt und dann verbunden wird.

Alternativ kann auch das Gehäuse zuerst in seine Endform geformt und verbunden werden und dann die Packung aus Katalysatorkörper bzw. Filterkörper und Montagematte in das Gehäuse eingebracht werden.

Im Prinzip wird das für jedes Gehäuse für jeden einzelnen Katalysatorkörper bzw. Filterkörper das Gehäusematerial individuell zugeschnitten. Somit braucht weder eine Aufweitung noch eine Reduzierung des Gehäuses zu erfolgen und die Randbedingungen sowohl in Bezug auf die Unverschieblichkeit des Katalysatorkörpers bzw. Filterkörper im Gehäuse als auch in Bezug auf die mechanische Belastung des Katalysatorkörper bzw. Filterkörpers können eingehalten werden. Gleichzeitig ist das Verfahren von der fertigungstechnischen Seite her einfach beherrschbar.

Bei einer vorteilhaften Variante des Verfahrens, bei der als Montagematte eine Intumeszenzmatte (Quellmatte) verwendet wird, wird bei der Festlegung der Länge, auf welche das Gehäusematerial, also z.B. das Blech, zu dem Stück zugeschnitten wird, die Dichte des Materials der Intumeszenzmatte berücksichtigt. Die Dichte des Materials der Intumeszenzmatte kann als Mass für deren Fähigkeit des Aufquellens betrachtet werden, weshalb durch eine Bestimmung der Dichte die Genauigkeit, mit welcher die Länge, auf die das Gehäusematerial zu dem Stück zugeschnitten wird, noch erhöht werden kann, und damit zu einer weiteren Optimierung im Hinblick auf die einzuhaltenden Randbedingungen für den Katalysatorkörper bzw. Filterkörper führt.

Die Bestimmung der Dichte des Materials der Intumeszenzmatte kann durch Wiegen der Intumeszenzmatte erfolgen. Dabei wird über ein kurzes Stück der Bahn, von welcher die Intumeszenzmatte abgetrennt wird, von einer homogenen Dichte des Materials ausgegangen.

Bei einer weiteren Variante des Verfahrens wird bei der Festlegung der Länge, auf welche das Gehäusematerial zu dem Stück zugeschnitten wird, der Elastizitätsmodul des Materials der Montagematte berücksichtigt. Dieses Variante zielt auf eine Verbesserung des Verhaltens im Hinblick auf die im allgemeinen etwas kritischere Randbedingung bei kalten Temperaturen (z.B. kurz nach dem Start) ab, wo ein sicheres Halten des Katalysatorkörpers bzw. Filterkörpers an Ort und Stelle im Gehäuse im Vordergrund steht.

Das zugeschnittene und zu der Gehäuseform geformte Stück (z.B. Blechstück) kann gemäss einer speziellen Verfahrensvariante durch Schweissen zu dem Gehäuse verbunden werden.

Dabei kann das Gehäuse derart geformt werden, dass ein Überlappungsbereich gebildet wird, in welchem das Gehäusematerial verschweisst wird.

Bei einer anderen Verfahrensvariante kann das zugeschnittene und zu der Gehäuseform geformte Stück (z.B. Blechstück) durch Löten zu dem Gehäuse verbunden werden, was insbesondere bei geringeren Blechstärken in Betracht kommt.

Wiederum bei einer anderen Verfahrensvariante kann das zugeschnittene und zu der Gehäuseform geformte Blechstück mechanisch zu dem Gehäuse verbunden werden.

Nach einer weiteren Verfahrensvariante wird zusätzlich zu der Packung aus Katalysatorkörper bzw. Filterkörper und Montagematte ein Schalldämpfer in das Gehäuse eingebracht, sodass gleichzeitig eine Geräuschreduktion erfolgen kann.

Schliesslich kann das Verfahren gemäss einer weiteren Verfahrensvariante zur Herstellung eines Abgaskatalysators bzw. Diesel-Partikelfilters eingesetzt werden, bei dem das Gehäuse ein inneres und ein äusseres Gehäuse umfasst. Das äussere Gehäuse wird um das innere Gehäuse herum angeordnet und umschliesst somit das innere Gehäuse. In dem inneren Gehäuse wird die Packung aus Abgaskatalysator bzw. Filterkörper und Montagematte und ggf. der Schalldämpfer angeordnet. Vorzugsweise wird das äussere Gehäuse gegen das innere Gehäuse thermisch isoliert angeordnet, sodass die Temperatur des äusseren Gehäuses erheblich unterhalb der Temperatur des inneren Gehäuses liegt.

Die Aspekte der erfindungsgemässen Vorrichtung betreffen im wesentlichen deren Steuerung, die so ausgebildet ist, dass sie die entsprechenden Einrichtungen in der Weise ansteuert, dass die einzelnen Schritte wie oben diskutiert durchgeführt werden können.

Weitere vorteilhafte Aspekte des erfindungsgemässen Verfahrens bzw. der erfindungsgemässen Vorrichtung ergeben sich aus der nachfolgenden Erläuterung einer Ausführungsvariante anhand der Zeichnung. Die Erläuterung erfolgt für einen Abgaskatalysator, gilt aber analog auch für ein Diesel-Partikelfilter. Es zeigen:
- Fig. 1: eine Variante des erfindungsgemässen Verfahrens zur Herstellung eines Abgaskatalysators,
- Fig. 2: eine Möglichkeit zur Bestimmung der Abmessungen des Substrats,
- Fig. 3: ein Ausführungsbeispiel für ein Stück einer Intumeszenzmatte als Montagematte,
- Fig. 4: ein Halbzeug mit einem Gehäuse und darin angeordneter Packung aus Substrat und Intumeszenzmatte,
- Fig. 5: einen Abgaskatalysator mit bereits angebrachten Endstücken, und
- Fig. 6,7: die Einzelheiten VI bzw. VII aus Fig. 5, und
- Fig. 8: eine weitere Variante des erfindungsgemässen Verfahrens.

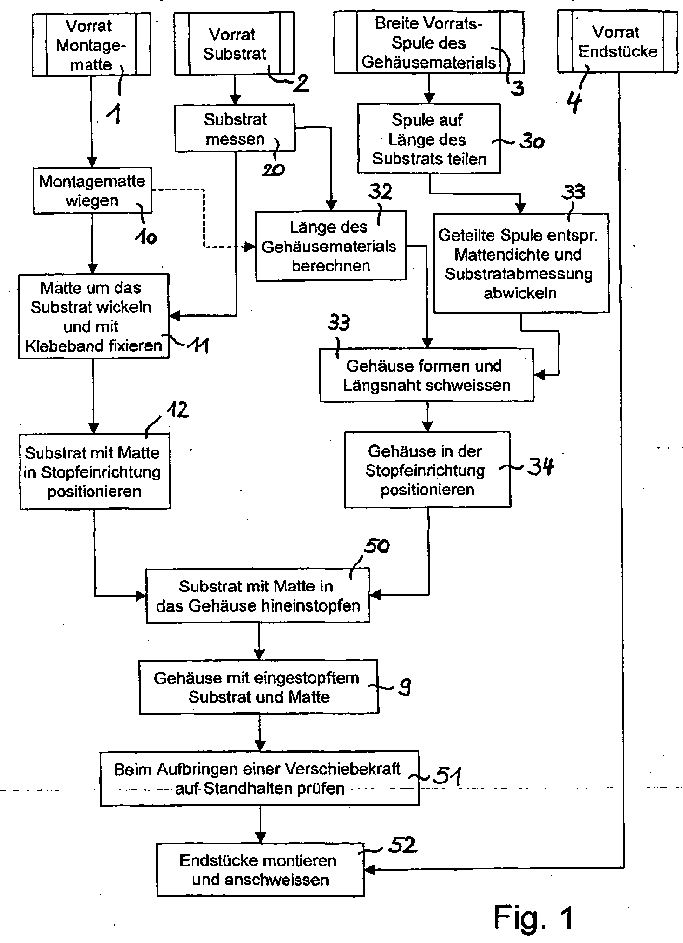

Das in **Fig. 1** gezeigte Ausführungsbeispiel des Ablaufs des erfindungsgemässen Verfahrens sieht die Bereitstellung eines Vorrats 1 von Montagematten, eines Vorrats 2 von Substraten (Katalysatorkörpern), einer breiten Vorratsspule 3 des Materials für das Gehäuse, sowie einen Vorrat 4 von Endstücken vor.

Als Montagematte kommen beispielsweise Intumeszenzmatten, Drahtgestricke oder Hybride in Frage. Bei der hier näher erläuterten Variante wird eine Intumeszenzmatte (Quellmatte) verwendet, deren Dichte ein Mass für deren Fähigkeit ist, bei Erwärmung aufzuquellen. Die Dichte der Intumeszenzmatte wird durch Feststellen von deren Gewicht (bei bekannter Länge und Dicke) in einem Schritt 10, in welchem die Intumeszenzmatte gewogen wird, ermittelt. Es ist selbstverständlich, dass zur Bestimmung der Quellfähigkeit bzw. Kompressibilität auch andere geeignete Verfahren zum Einsatz kommen können.

Aus dem Vorrat 2 von Substraten wird ein Substrat (Katalysatorkörper) entnommen, und in einem Schritt 20 werden die äusseren Abmessungen des Substrats bestimmt. Die Bestimmung der äusseren Abmessungen des Substrats kann z.B. durch eine berührungslose Messung in einer Messstation derart erfolgen, dass mit Hilfe eines Lasers das Substrat an einigen wohldefinierten Messstellen und den jeweils gegenüber liegenden Messstellen abgetastet wird, und aus den so ermittelten Durchmessern des Substrats an diesen wohldefinierten Messstellen ein mittlerer Durchmesser des Substrats bestimmt wird. Alternativ kann der Durchmesser auch mit einem Massband bzw. Messstreifen um den Katalysatorkörper herum gemessen werden.

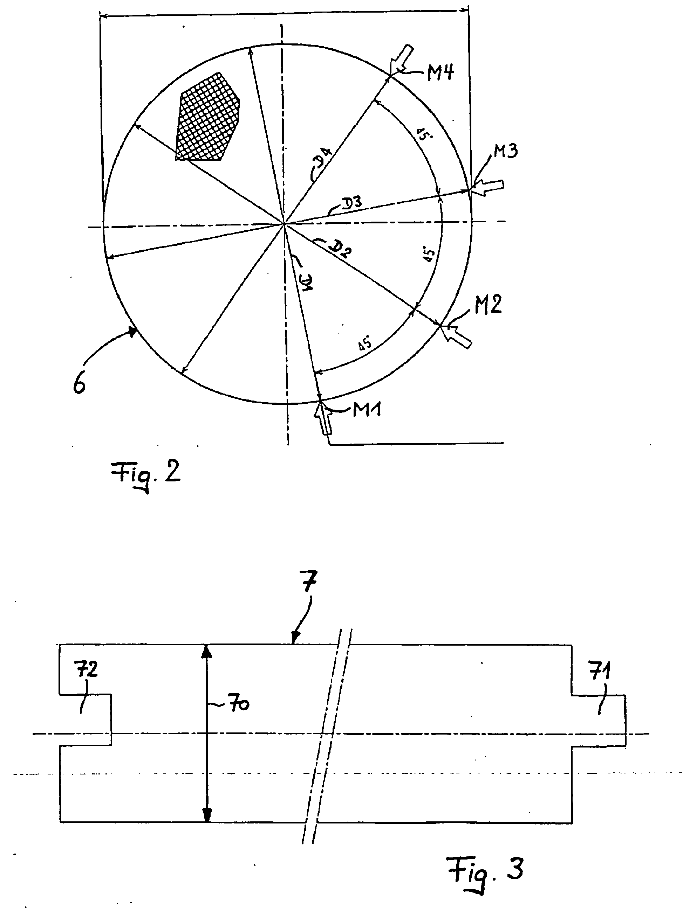

In **Fig. 2** ist eine Möglichkeit zur Bestimmung der Abmessungen des Substrats 6 in Form der Bestimmung des mittleren Durchmessers des Substrats 6 dargestellt. Das Substrat 6 weist hier vereinfacht dargestellt eine zylindrische Aussenkontur auf, was in der Praxis aufgrund der Toleranzen bei der Herstellung der Substrate 6 häufig so nicht gegeben ist. Um einen mittleren Durchmesser des Substrats 6 zu ermitteln, wird gemäss Fig. 2 an vier verschiedenen, jeweils um 45° versetzten, Messstellen M1,M2,M3,M4 (siehe entsprechende Pfeile in Fig. 2) und an den gegenüberliegenden Messstellen das Substrat 6 von einem Laser (nicht dargestellt) abgetastet. Die auf diese Weise jeweils ermittelten Durchmesser D1,D2,D3,D4 werden aufsummiert und durch die Anzahl der ermittelten Durchmesser - hier: vier - dividiert. Das so ermittelte arithmetische Mittel der vier Durchmesser D1, D2, D3, D4 ist dann repräsentativ für den mittleren Durchmesser des Substrats 6.

Dieser mittlere Durchmesser des Substrats 6 wird einerseits in einem Schritt 11 berücksichtigt, in welchem die Intumeszenzmatte um das Substrat herum gewickelt und mit Hilfe eines Klebebands oder mit Hilfe einer Klammer, einer Hülse oder einem Ring fixiert wird, und andererseits in einem Schritt 32, in welchem die erforderliche Länge des Gehäusematerials berechnet wird.

Das Gehäusematerial (z.B. Stahlblech) wird bei der Variante gemäss Fig. 1 in Form einer breiten Vorratsspule 3 bereit gestellt. Die Breite dieser breiten Vorratsspule ist jedoch typischerweise grösser als die Länge des Substrats, sodass die breite Vorratsspule in einem Schritt 30 zunächst geteilt wird (quasi in mehrere Spulen), wobei jede geteilte Spule für sich genommen eine Breite besitzt, die an die Länge des Substrats angepasst ist, sodass es nur noch notwendig ist, das auf der geteilten Spule bereit gestellte Gehäusematerial auf die jeweils optimale Länge zuzuschneiden.

Dazu wird in einem Schritt 31 die erforderliche Länge des Gehäusematerials von der geteilten Spule abgewickelt, und zwar unter Berücksichtigung der Dichte der Intumeszenzmatte (Schritt 10) und unter Berücksichtigung des ermittelten mittleren Durchmessers des Substrats (Schritt 20).

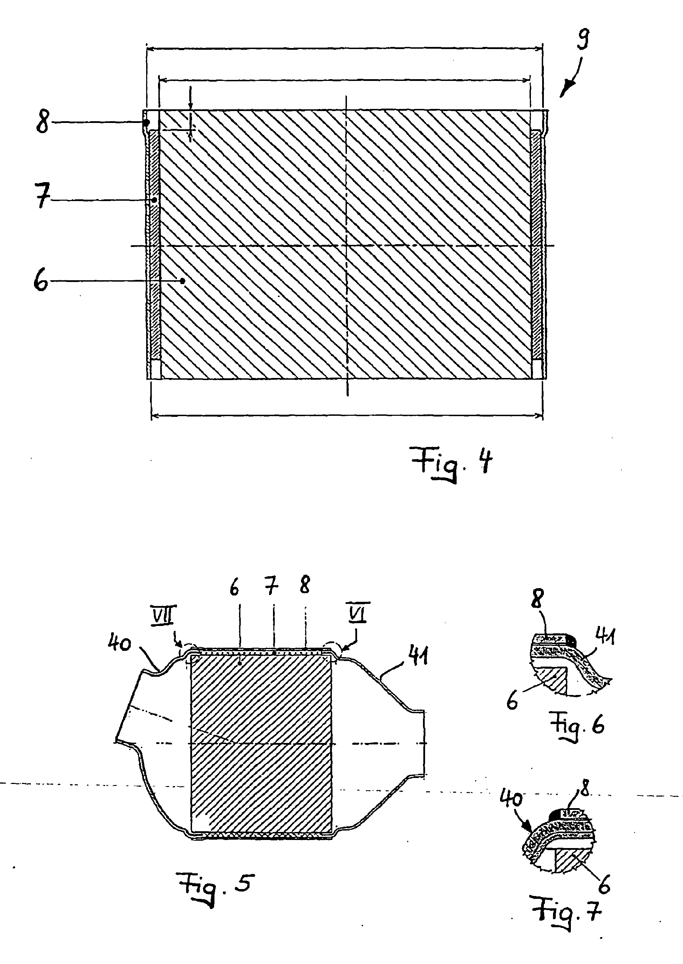

Das Formen des zugeschnittenen Stücks (siehe Fig. 4) zu der Gehäuseform erfolgt dann in einem weiteren Schritt 33 (Fig. 1), nachdem die zuvor ermittelte und von der geteilten Spule abgewickelte Länge an Gehäusematerial abgeschnitten worden ist, wobei die - in diesem Falle zylindrische - Gehäuseform durch Rollen (mit einer 2-Rollen-Einrichtung, einer 3-Rollen-Einrichtung oder einer 4-Rollen-Einrichtung) des zugeschnittenen Stücks des Gehäusematerials zu der Gehäuseform geformt wird. Alternativ zu Rolleneinrichtungen kommen zur Erzeugung der Gehäuseform auch Formen in Betracht, durch welche das zugeschnittene Stück des Gehäusematerials vorgeschoben wird, wobei das zugeschnittene Stück des Gehäusematerials beim Vorschieben durch die Form die Gehäuseform erhält. Das Formen des zugeschnittenen Stücks des Gehäusematerials kann insbesondere auch CNC-gesteuert sein, um Gehäuseformen herstellen zu können, die - unabhängig von der Form des Substrats - optimal an die jeweilige Form des Substrats angepasst sind. Das Zuschneiden des Gehäusematerials kann beispielsweise mit einer abscherenden Schneidvorrichtung erfolgen, aber ebenso kommen auch ein Flammenschneidverfahren (Sauerstoff- oder Laserschneiden) in Betracht. Als Schweissverfahren zum Verbinden des geformten, aber noch nicht verbundenen, Gehäuses kommen dabei insbesondere Metall-Inertgas-Schweissen (MIG-Schweissen), Wolfram-Inertgas-Schweissen (TIG-Schweissen), Plasma-Schweissen, Laser-Schweissen, oder Widerstands-Schweissen in Betracht. Aber auch Hart-Lötverfahren kommen (je nach Blechstärke) in Betracht, so z.B. Metall-Inertgas-Löten (MIG-Löten), Vakuum-Löten, oder Lötofen-Verfahren. Beim Schweissen kann die Schweissnaht eine Stossnaht (Stumpfnaht) sein oder es kann eine Schweissung im Bereich einer Überlappung erfolgen, wie dies beispielsweise von sogenannten "Tourniquet"-Gehäusen her bekannt ist. Für den Fall einer Schweissung im Bereich einer Überlappung muss natürlich beim Festlegen der Länge für das Zuschneiden des Gehäusematerials ein solcher Überlappungsbereich mit einberechnet werden. Das auf diese Weise fertig gestellte Gehäuse 8 ist dann vorbereitet für das Einbringen einer Packung bestehend aus dem Substrat 6 und einer um das Substrat 6 herum gelegten Intumeszenzmatte 7.

Eine solche Intumeszenzmatte 7 ist in **Fig. 3** zu erkennen. Die Breite 70 der Intumeszenzmatte 7 ist an die Länge des Substrats 6 angepasst. In Längsrichtung betrachtet weist die Intumeszenzmatte 7 an einem Ende einen abstehenden Vorsprung 71 auf, während sie an dem gegenüberliegenden Ende eine entsprechende Einkerbung 72 aufweist. Je nach Umfang des Substrats 6 kann beim Umwickeln des Substrats 6 mit der Intumeszenzmatte 7 der Vorsprung 71 mehr oder weniger weit in die Einkerbung 72 eingebracht werden, um die Intumeszenzmatte 7 vorläufig zu fixieren (nach Art einer Nut-Feder-Verbindung). Die endgültige Fixierung der Intumeszenzmatte 7 erfolgt dann typischerwiese mit Hilfe einer Klammer, einer Hülse oder eines Rings oder mit Hilfe eines Klebebandstreifens (nicht dargestellt), der dann die um das Substrat 6 herum gelegte Intumeszenzmatte 7 endgültig in der gewünschten Position fixiert. Die so hergestellte Packung aus Substrat 6 mit der um das Substrat 6 herum gelegten und endgültig fixierten Intumeszenzmatte 7 ist dann vorbereitet zum Einbringen in das zugehörige und wie oben beschrieben hergestellte Gehäuse 8.

Das Gehäuse 8 weist einen Innendurchmesser auf, der kleiner ist als der Aussendurchmesser der Packung. Bei Anwendung des erfindungsgemässen Verfahrens ist der Innendurchmesser des Gehäuses so bemessen, dass die in das Gehäuse 8 eingebrachte Packung so fest sitzt, dass sie einerseits im kalten Zustand einer vorbestimmten Verschiebekraft standhält - sich also beim Aufbringen dieser Verschiebekraft in Längsrichtung nicht verschiebt - andererseits aber auch nicht so fest im Gehäuse sitzt, dass bei einer entsprechenden Erwärmung und bei Lasten, wie sie beim Betrieb von Kraftfahrzeugen auftreten, Beschädigungen des Substrats 6 auftreten können. Denn an die Abgaskatalysatoren wird - wie bereits eingangs schon erläutert - heutzutage die Anforderung gestellt, dass sie die Lebensdauer des Motors des Kraftfahrzeugs unbeschadet überstehen.

Die Packung aus Substrat 6 und Intumeszenmatte 7 muss nun in das Gehäuse 8 hineingestopft werden, wozu in einem Schritt 34 das Gehäuse 8 in einer Stopfeinrichtung positioniert wird und in einem entsprechenden Schritt 12 die Packung (Substrat 6 mitsamt Intumeszenzmatte 7) in der Stopfeinrichtung positioniert wird, sodass anschliessend in einem Schritt 50 das Stopfen der Packung (Substrat 6 mit Intumeszenzmatte 7) in das Gehäuse 8 hinein erfolgen kann.

Man erhält auf diese Weise ein Halbzeug 9, welches das Gehäuse 8 und die in dem Gehäuse angeordnete Packung aus Substrat 6 und Intumeszenzmatte 7 umfasst. Dieses Halbzeug 9 ist in **Fig. 4** in einer Schnittdarstellung zu erkennen. Das Gehäuse 8 kann an einem Ende (oder auch an beiden Enden) leicht aufgeweitet sein, um ein Endstück 40 bzw. 41 aus dem Vorrat 4 von Endstücken in das Gehäuse 8 des Halbzeugs 9 einschieben und anschliessend mit dem Gehäuse 8 verschweissen zu können.

Zuvor wird allerdings (siehe Fig. 1) in einem Schritt 51 eine vorbestimmte Prüf-Verschiebekraft in Längsrichtung des Halbzeugs 9 auf das Substrat 6 aufgebracht, um zu prüfen, ob das Substrat 6 auch genügend fest im Gehäuse 8 sitzt. Bei einem ordnungsgemäss hergestellten Halbzeug 9 kommt es beim Aufbringen der Prüf-Verschiebekraft zu keiner Längsverschiebung des Substrats 6 im Gehäuse 8. Die Prüf-Verschiebekraft ist von ihrer Grösse her so bemessen, dass man bei bestandener Prüfung davon ausgehen kann, dass die eingangs genannte Randbedingung bei kaltem Zustand des Motors eingehalten werden.

Sodann werden in einem Schritt 52 die beiden Endstücke 40 bzw. 41 in das Gehäuse 8 eingebracht und mit diesem verschweisst. Ein derart hergestellter Abgaskatalysator C ist in **Fig. 5** dargestellt, wobei der fertiggestellte Abgaskatalysator C noch mit einem Zuführrohr und einem Abführrohr und ggf. noch mit Vorrichtungen zur Aufhängung versehen ist (hier nicht dargestellt), um als Endprodukt in den Handel gebracht zu werden. In Fig. 6 und Fig. 7 sind die Einzelheiten VI und VII aus Fig. 5 noch einmal vergrössert dargestellt, um die Art und Weise, wie die Endstücke 40 bzw. 41 mit dem Gehäuse 8 verschweisst sein können, noch deutlicher zu machen. Hierbei handelt es sich aber nur um eine von mehreren Möglichkeiten, wie die Endstücke mit dem Gehäuse verschweisst sein können, es bieten sich jedoch auch andere Möglichkeiten der Verschweissung von Gehäuse 8 und Endstücken 40,41. Auch hier kommen Lötverfahren bei der Verbindung der Endstücke 40,41 mit dem Gehäuse 8 in Betracht.

Das anhand der Figuren 1-7 beschriebene Verfahren stellt eine Variante des erfindungsgmässen Verfahrens dar, zu der sich dem Fachmann an einigen Stellen Alternativen eröffnen. So kann beispielsweise das Gehäusematerial in Form von ungewickelten (Blech-)Stücken bereitgestellt werden, die dann auf die erforderliche Grösse zugeschnitten werden. Beim Zuschneiden der Stücke auf die erforderliche Länge kann die Dicke des zuzuschneidenden (Blech-)stücks (z.B. Stahlblech) ebenfalls berücksichtigt werden. Auch kann der Gehalt an Bindemittel in der Montagematte berücksichtigt werden.

Wie bereits weiter oben erwähnt, kann zusätzlich zu dem Substrat 6 noch ein Schalldämpfer in das Gehäuse 8 eingebracht werden. Soll dies erfolgen, muss die Breite des Gehäusematerials von Anfang an so gewählt werden, dass auch der Schalldämpfer noch im Gehäuse 8b untergebracht werden kann.

Auch kann das Gehäuse ein inneres und ein äusseres Gehäuse umfassen, wobei das äussere Gehäuse um das innere Gehäuse herum angeordnet ist, also das innere Gehäuse umschliesst. In dem inneren Gehäuse ist die Packung aus Abgaskatalysator und Montagematte angeordnet, ggf. noch der Schalldämpfer. Vorzugsweise ist bei einem solchen Gehäuse mit innerem und äusserem Gehäuse das äussere Gehäuse thermisch gegen das innere Gehäuse "isoliert", sodass die Temperatur des äusseren Gehäuses beim Betrieb des Abgaskatalysators deutlich geringer ist als die Temperatur des inneren Gehäuses.

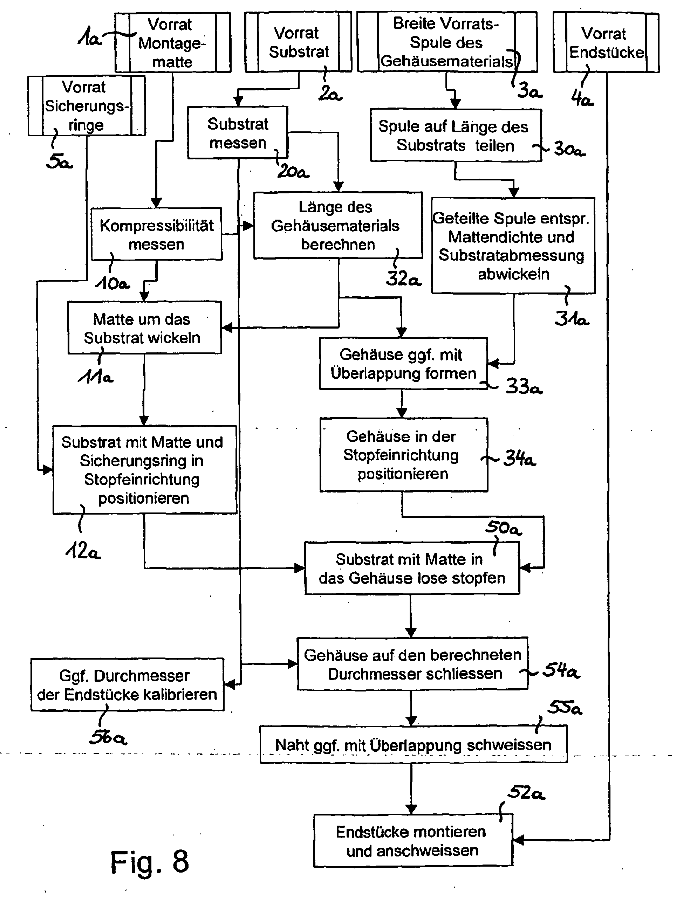

Eine weitere Variante des erfindungsgemässen Verfahrens ist in **Fig. 8** dargestellt. Diese Verfahrensvariante ist in vielen Schritten ähnlich zu der Verfahrensvariante, die mit Hilfe von Fig. 1 erläutert wurde. Aus diesem Grund wird bei vielen Verfahrensschritten zur Unterscheidung dieser Variante lediglich ein Buchstabe "a" dem entsprechenden Bezugszeichen der Variante aus Fig. 1 hinzugefügt.

So wird erneut ein Vorrat 1a von Montagematten bereit gestellt, ein Vorrat 2a von Substraten (z.B. Katalysatorkörpern), einer breiten Vorratsspule 3a des Gehäusematerials, sowie ein Vorrat 4a von Endstücken. Zusätzlich wird hier noch ein Vorrat von Sicherungsringen 5a bereit gestellt, die hier zur Sicherung der jeweiligen um das Substrat herum gewickelten Montagematte dient.

Aus dem Vorrat 2a von Substraten wird ein Substrat entnommen und im Schritt 20a werden erneut die äusseren Abmessungen des Substrats bestimmt. Dies kann entweder so erfolgen wie weiter oben bereits beschrieben, oder aber auch mit einem Massband bzw. Messstreifen bestimmt werden.

Die Kompressibilität der Montagematte wird in einem Schritt 10a bestimmt. Sodann wird die Montagematte in einem Schritt 11a um das Substrat herum gewickelt und z.B. mit Hilfe von aus dem Vorrat 5a entnommenen Sicherungsringen um das Substrat herum gewickelt gehalten. Die so gebildete Packung aus Substrat mit um das Substrat herum gewickelter und gesicherter Montagematte wird in einem Schritt 12a in der Stopfeinrichtung positioniert.

Das Gehäusematerial (z.B. Stahlblech) wird erneut in Form einer breiten Vorratsspule 3a bereit gestellt, die jedoch typischerweise grösser ist als die Länge des Substrats, sodass sie in einem Schritt 30a geteilt wird, sodass die geteilte Spule für sich genommen dann eine Breite besitzt, die an die Länge des Substrats angepasst ist, sodass das auf der geteilten Spule bereit gestellte Gehäusematerial nur noch auf die jeweils optimale Länge zugeschnitten werden muss.

Die Berechnung der erforderlichen Länge des Gehäusematerials erfolgt in Schritt 32a, wobei in diese Berechnung der ermittelte Durchmesser des Substrats und die Kompressibilität (Dichte als repräsentative Grösse, siehe oben) der Montagematte einfliesst. In Schritt 31a wird das Gehäusematerial von der geteilten Spule abgewickelt, und zwar unter Berücksichtigung der Kompressibilität (Dichte) der Montagematte und unter Berücksichtigung des ermittelten Durchmessers des Substrats. Dabei kann ggf. eine gewünschte Überlappung (z.B. für die Verschweissung) berücksichtigt werden. Das Gehäuse kann in einem Schritt 33a grob vorgeformt werden, muss aber noch nicht auf seine endgültige Form hin geschlossen werden. In einem Schritt 34a wird dann dieses Gehäuse in der Stopfeinrichtung positioniert, wo auch die Packung aus Substrat und gesicherter Montagematte positioniert wird.

In einem Schritt 50a kann dann ein loses Stopfen der Packung aus Substrat mit gesicherter Montagematte in das Gehäuse hinein erfolgen. Danach wird in einem Schritt 54a das Gehäuse auf den berechneten Durchmesser geschlossen und in einem Schritt 55a wird die Naht geschweisst, ggf. mit einer Überlappung oder als Stossnaht. Danach werden in einem Schritt 52a die aus dem Vorrat 4a von Endstücken entnommenen Endstücke montiert und ebenfalls angeschweisst. In einem Schritt 56a kann noch aufgrund der Messungen des Durchmessers des Substrats eine Art Kalibrierung der Durchmesser der erforderlichen Endstücke erfolgen, sodass die Endstücke möglichst optimal passen.

Auch bei dieser Verfahrensvariante bleibt der wesentliche Vorteil, nämlich dass das Gehäusematerial genau auf die erforderliche Länge zugeschnitten wird. Das Gehäuse ist somit bei dem erfindungsgemässen Verfahren individuell immer optimal auf das jeweilige Substrat zugeschnitten ("taylormade").

Auch bei dieser Verfahrensvariante kann ggf. ein Schalldämpfer in das gleiche Gehäuse eingebracht werden, und die übrigen Varianten (z.B. Doppelgehäuse etc.), die vorstehend schon für die Variante gemäss Fig. 1 erläutert worden sind, gelten sinngemäss auch für diese Verfahrensvariante.

## Patentansprüche

1. Verfahren zur Herstellung eines Abgaskatalysators oder eines Diesel-Partikelfilters, bei welchem Verfahren ein Katalysatorkörper (6) bzw. ein Filterkörper bereit gestellt wird und die Abmessungen (D1,D2,D3,D4) des Katalysatorkörpers (6) bzw. des Filterkörpers ermittelt werden (20,20a), bei welchem der Katalysatorkörper (6) bzw. der Filterkörper mit einer um den Katalysatorkörper (6) bzw. Filterkörper herum gelegten Montagematte (7) versehen und so eine Packung aus Katalysatorkörper (6) bzw. Filterkörper und Montagematte (7) gebildet wird (11), und bei welchem die so gebildete Packung aus Katalysatorkörper (6) bzw. Filterkörper und Montagematte (7) in ein Gehäuse (8) eingebracht wird, **dadurch gekennzeichnet, dass** aufgrund der ermittelten Abmessungen (D1,D2,D3,D4) des Katalysatorkörpers (6) bzw. Filterkörpers die Länge festgelegt wird (32,32a), auf die ein Gehäusematerial zu einem Stück zugeschnitten wird, dass das so zugeschnittene Stück zu einem Gehäuse geformt wird, und dass dann entweder die Packung aus Katalysatorkörper (6) bzw. Filterkörper und Montagematte (7) in das Gehäuse (8) eingebracht (50a) und dann das Gehäuse (8) verbunden wird (54a,55a), oder das Gehäuse (8) verbunden wird (33) und dann die Packung aus Katalysatorkörper (6) bzw. Filterkörper und Montagematte (7) in das Gehäuse (8) eingebracht wird (50).

2. Verfahren nach Anspruch 1, dass als Montagematte eine Intumeszenzmatte (7) verwendet wird, und bei welchem Verfahren bei der Festlegung (32,32a) der Länge, auf welche das Gehäusematerial zu dem Stück zugeschnitten wird, die Dichte des Materials der Intumeszenzmatte (7) berücksichtigt wird.

3. Verfahren nach Anspruch 2, bei welchem die Dichte des Materials der Intumeszenzmatte durch Wiegen (10) der Intumeszenzmatte erfolgt.

4. Verfahren nach einem der Ansprüche 1 bis 3, bei welchem bei der Festlegung (32,32a) der Länge, auf welche das Gehäusematerial zu dem Stück zugeschnitten wird, der Elastizitätsmodul des Materials der Montagematte (7) berücksichtigt wird.

5. Verfahren nach einem der Ansprüche 1 bis 4, bei welchem das zugeschnittene und geformte Stück des Gehäusematerials durch Schweissen zu dem Gehäuse (8) verbunden wird.

6. Verfahren nach Anspruch 5, bei welchem das Gehäuse derart geformt wird, dass ein Überlappungsbereich gebildet wird, in welchem das Gehäusematerial verschweisst ist.

7. Verfahren nach einem der Ansprüche 1 bis 4, bei welchem das zugeschnittene und geformte Stück des Gehäusematerials durch Löten zu dem Gehäuse (8) verbunden wird.

8. Verfahren nach einem der Ansprüche 1 bis 4, bei welchem das zugeschnittene und geformte Stück des Gehäusematerials mechanisch zu dem Gehäuse (8) verbunden wird.

9. Verfahren nach einem der vorangehenden Ansprüche, bei welchem zusätzlich zu der Packung aus Katalysatorkörper (6) bzw. Filterkörper und Montagematte (7) ein Schalldämpfer in das Gehäuse (8) eingebracht wird.

10. Verfahren nach einem der vorangehenden Ansprüche, bei welchem das Gehäuse ein inneres und ein äusseres Gehäuse umfasst, wobei das äussere Gehäuse um das innere Gehäuse herum angeordnet wird und somit das innere Gehäuse umschliesst, und wobei in dem inneren Gehäuse (8) die Packung aus Katalysatorkörper (6) bzw. Filterkörper und Montagematte (7) und ggf. der Schalldämpfer angeordnet wird.

11. Verfahren nach Anspruch 10, **dadurch gekennzeichnet, dass** ein thermisch gegen das innere Gehäuse isoliertes äusseres Gehäuse um das innere Gehäuse (8) herum angeordnet wird.

12. Vorrichtung zur Herstellung eines Abgaskatalysators oder eines Diesel-Partikelfilters, mit
- einer Messeinrichtung zur Bestimmung der Abmessungen (D1,D2,D3,D4) eines Katalysatorkörpers (6) oder Filterkörpers
- einer Einrichtung zum Herumlegen einer Montagematte (7) um den Katalysatorkörper (6) bzw. Filterkörper zur Bildung einer Packung aus Katalysatorkörper (6) bzw. Filterkörper und Montagematte (7),
- einer Spule zum Bereitstellen eines Gehäusematerials,
- einer Abwickeleinrichtung zum Abwickeln eines Stücks des Gehäusematerials von der Spule,
- einer Schneideinrichtung zum Zuschneiden des Gehäusematerials zu einem Stück,
- einer Einrichtung zur Herstellung des Gehäuses (8) aus dem zugeschnittenen Stück des Gehäusematerials, welche Einrichtung eine Station zum Formen des zugeschnittenen Stücks zu der Gehäuseform sowie eine Station zum Verbinden des geformten Stücks zu dem Gehäuse (8) umfasst
- einer Einrichtung zum Einbringen der Packung aus Katalysatorkörper (6) bzw. Filterkörper und Montagematte (7) in das Gehäuse,
- einer Steuerung,
**dadurch gekennzeichnet, dass**
die Steuerung so ausgebildet ist, dass sie aufgrund der ermittelten Abmessungen (D1,D2,D3,D4) des Katalysatorkörpers (6) bzw. Filterkörpers die erforderliche Länge des Gehäusematerials festlegt und die Einrichtung zum Abwickeln und die Schneideinrichtung derart ansteuert, dass die erforderliche Länge an Gehäusematerial von der Spule abgewickelt und von der Schneideinrichtung zu dem entsprechenden Stück zugeschnitten wird.

13. Vorrichtung nach Anspruch 12, **dadurch gekennzeichnet, dass** die Steuerung so ausgebildet ist, dass sie bei der Festlegung der erforderlichen Länge des Stücks des Gehäusematerials die Dichte des Materials der Montagematte (7) berücksichtigt.

14. Vorrichtung nach Anspruch 13, bei welchem zur Bestimmung der Dichte des Materials der Montagematte (7) eine Einrichtung zum Wiegen der Montagematte vorgesehen ist.

15. Vorrichtung nach einem der Ansprüche 12 bis 14, bei welcher die Station zum Verbinden des zugeschnittenen und geformten Stücks des Gehäusematerials eine Schweissstation ist.

16. Vorrichtung nach einem der Ansprüche 12 bis 14, bei welcher die Station zum Verbinden des zugeschnittenen und geformten Stücks des Gehäusematerials eine Lötstation ist.

## Claims

1. Method for the manufacture of an exhaust catalyst or a diesel particulate filter, wherein a catalyst body (6) resp. a filter body is provided and the dimensions (D1,D2,D3,D4) of the catalyst body (6) resp. the filter body are determined (20,20a), wherein the catalyst body (6) resp. the filter body is provided with an assembly matting (7) wrapped around the catalyst body (6) resp. the filter body to form (11) a pack of the catalyst body (6) resp. the filter body and the assembly matting (7), and wherein the so formed pack of the catalyst body (6) resp. the filter body and the assembly matting (7) is introduced in a housing (8), **characterized in that**, based on the determined dimensions (D1,D2,D3,D4) of the catalyst body (6) resp. the filter body, the length is established (32,32a), to which a housing material is cut to a piece, that the so cut piece is formed to a housing shape, and that then either the pack of the catalyst body (6) resp. the filter body and the assembly matting (7) are introduced (50a) into the housing (8) and then the housing (8) is joined (54a,55a), or the housing (8) is joined (33) and then the pack of the catalyst body (6) resp. the filter body and the assembly matting (7) is introduced (50) into the housing (8).

2. Method according to claim 1, wherein an intumescent matting (7) is used as the assembly matting, and wherein upon determination (32,32a) of the length, to which the piece of housing material is cut, the density of the material of the intumescent matting (7) is taken into account.

3. Method according to claim 2, wherein the density of the material of the intumescent matting is determined by weighing (10) the intumescent matting.

4. Method according to any one of claims 1 to 3, wherein upon determining (32,32a) the length, to which a piece of housing material is cut, the modulus of elasticity of the material of the assembly matting (7) is taken into account.

5. Method according to any one of claims 1 to 4, wherein the cut and formed piece of the housing material is joined to the housing (8) by welding.

6. Method according to claim 5, wherein the housing is formed in such a way, that an overlap area is formed, in which the housing material is welded.

7. Method according to any one of claims 1 to 4, wherein the cut and formed piece of the housing material is joined to the housing (8) by brazing.

8. Method according to any one of claims 1 to 4, wherein the cut and formed piece of the housing material is joined to the housing (8) mechanically.

9. Method according to any one of the preceding claims, wherein in addition to the pack of the catalyst body (6) resp. the filter body and the assembly matting (7) a sound absorber is introduced into the housing (8).

10. Method according to any one of the preceding claims, wherein the housing comprises an inner and an outer housing, wherein the outer housing is arranged around the inner housing and accordingly encloses the inner housing, and wherein in the inner housing (8) the pack of the catalyst body (6) resp. the filter body and the assembly matting (7) and, if applicable the sound absorber, are arranged.

11. Method according to claim 10, **characterized in that** an outer housing is arranged around the inner housing (8) wherein the outer housing is thermally isolated from the inner housing.

12. Apparatus for the manufacture of an exhaust catalyst or a diesel particulate filter, with
- a measuring device for determining the dimensions (D1,D2,D3,D4) of a catalyst body (6) or a filter body
- a device for wrapping an assembly matting (7) around the catalyst body (6) resp. the filter body to form a pack of the catalyst body (6) resp. the filter body and the assembly matting (7),
- a bobbin to provide a housing material,
- an unreeling device to unreel a piece of the housing material from the bobbin,
- a cutting device for cutting the housing material to a piece,
- a device for the manufacture of the housing (8) from the cut piece of the housing material, wherein the device comprises a station to form the cut piece to the housing shape, as well as a station to join the formed piece to the housing (8),
- a device for introducing the pack of the catalyst body (6) resp. the filter body and the assembly matting (7) into the housing,
- a control,
**characterized in that**,
the control is designed in such a way, that based on the determined dimensions (D1,D2,D3,D4) of the catalyst body (6) resp. the filter body, it determines the required length of the housing material and controls the device for unreeling and the cutting device in such a way, that the required length of housing material is unreeled from the bobbin and cut to the respective piece by the cutting device.

13. Apparatus according to claim 12, **characterized in that**, the control is designed in such a way, that in determining the required length of the piece of housing material it accounts for the density of the material of the assembly matting (7).

14. Apparatus according to claim 13, wherein for determining the density of the material of the assembly matting (7), a device for weighing the assembly matting is provided.

15. Apparatus according to any one of claims 12 to 14, wherein the station for joining the cut and formed piece of the housing material is a welding station.

16. Apparatus according to any one of claims 12 to 14, wherein the station for joining the cut and formed piece of the housing material is a brazing station.

## Revendications

1. Procédé de fabrication d'un catalyseur de gaz d'échappement ou d'un filtre à particules diesel, dans lequel procédé un corps de catalyseur (6) ou un corps de filtre est mis à disposition et les dimensions (D1, D2, D3, D4) du corps de catalyseur (6) ou du corps de filtre sont déterminées (20, 20a), dans lequel le corps de catalyseur (6) ou le corps de filtre est muni d'une nappe de montage (7) posée autour du corps de catalyseur (6) ou du corps de filtre, un ensemble constitué du corps de catalyseur (6) ou du corps de filtre et de la nappe de montage (7) étant ainsi formé (11), et dans lequel l'ensemble ainsi constitué du corps de catalyseur (6) ou du corps de filtre et de la nappe de montage (7) est introduit dans un caisson (8), **caractérisé en ce qu'**à la base des dimensions (D1, D2, D3, D4) déterminées pour le corps de catalyseur (6) ou le corps de filtre est définie (32, 32a) la longueur à laquelle un morceau de matériau du caisson est coupé, **en ce que** le morceau ainsi coupé à longueur est formé pour obtenir un caisson, et **en ce que** soit l'ensemble constitué du corps de catalyseur (6) ou du corps de filtre et de la nappe de montage (7) est introduit (50a) dans le caisson (8) et ledit caisson (8) est ensuite joint (54a, 55a), soit le caisson (8) est joint (33) et ensuite l'ensemble constitué du corps de catalyseur (6) ou du corps de filtre et de la nappe de montage (7) est introduit (50) dans le caisson (8).

2. Procédé selon la revendication 1, **caractérisé en ce que** la nappe de montage (7) utilisée est une nappe intumescente (7), et dans lequel procédé la densité du matériau de la nappe intumescente (7) est prise en compte lors de la définition (32, 32a) de la longueur, à laquelle le matériau du caisson est coupé pour obtenir un morceau de matériau.

3. Procédé selon la revendication 2, dans lequel la densité du matériau de la nappe intumescente est déterminée par peser (10) la nappe intumescente.

4. Procédé selon l'une quelconque des revendications 1 à 3, dans lequel le module d'élasticité du matériau de la nappe de montage (7) est pris en compte lors de la définition (32, 32a) de la longueur, à laquelle le matériau du caisson est coupé pour obtenir le morceau de matériau.

5. Procédé selon l'une quelconque des revendications 1 à 4, dans lequel le morceau de matériau du caisson, coupé à longueur et formé, est joint par soudage pour obtenir le caisson (8).

6. Procédé selon la revendication 5, dans lequel le caisson est formé de telle sorte qu'il se forme une zone de chevauchement, dans laquelle le matériau du caisson est soudé.

7. Procédé selon l'une quelconque des revendications 1 à 4, dans lequel le morceau de matériau du caisson, coupé à longueur et formé, est joint par brasage pour obtenir le caisson (8).

8. Procédé selon l'une quelconque des revendications 1 à 4, dans lequel le morceau de matériau du caisson, coupé à longueur et formé, est joint mécaniquement pour obtenir le caisson (8).

9. Procédé selon l'une quelconque des revendications précédentes, dans lequel un amortisseur de bruit est introduit dans le caisson (8) en plus de l'ensemble constitué du corps de catalyseur (6) ou corps de filtre et de la nappe de montage (7) .

10. Procédé selon l'une quelconque des revendications précédentes, dans lequel le caisson comporte un caisson intérieur et un caisson extérieur, le caisson extérieur étant disposé autour du caisson intérieur et enveloppe donc le caisson intérieur, et l'ensemble constitué du corps de catalyseur (6) ou du corps de filtre et de la nappe de montage (7) et, le cas échéant, l'amortisseur de bruit sont disposés dans le caisson (8) intérieur.

11. Procédé selon la revendication 10, **caractérisé en ce qu'**un caisson extérieur, isolé thermiquement par rapport au caisson intérieur, est disposé autour du caisson (8) intérieur.

12. Dispositif de fabrication d'un catalyseur de gaz d'échappement ou d'un filtre à particules diesel, comportant
- un dispositif de mesure pour déterminer les dimensions (D1, D2, D3, D4) d'un corps de catalyseur (6) ou d'un corps de filtre,
- un dispositif pour poser une nappe de montage (7) autour du corps de catalyseur (6) ou du corps de filtre pour former un ensemble constitué du corps de catalyseur (6) ou du corps de filtre et de la nappe de montage (7),
- une bobine pour la mise à disposition d'un matériau pour le caisson,
- un dispositif de déroulement pour dérouler de la bobine un morceau de matériau du caisson,
- un dispositif de coupe pour couper à longueur un morceau de matériau du caisson,
- un dispositif pour la fabrication du caisson (8) à partir du morceau coupé à longueur du matériau du caisson, lequel dispositif comporte une station, dans laqualle le morceau coupé à longueur est formé en caisson, ainsi qu'une station pour joindre le morceau formé en vue d'obtenir le caisson (8),
- un dispositif pour introduire dans le caisson l'ensemble constitué du corps de catalyseur (6) ou du corps de filtre et de la nappe de montage (7) ;
- un dispositif de commande,
**caractérisé en ce que**
le dispositif de commande est réalisé de telle sorte qu'à la base des dimensions (D1, D2, D3, D4) déterminées pour le corps de catalyseur (6) ou le corps de filtre, il définit la longueur nécessaire en matériau du caisson, et active le dispositif de déroulement et le dispositif de coupe de telle sorte que la longueur nécessaire en matériau du caisson est déroulée de la bobine et est coupée à longueur par le dispositif de coupe pour obtenir le morceau de matériau correspondant.

13. Dispositif selon la revendication 12, **caractérisé en ce que** le dispositif de commande est réalisé de telle sorte qu'il tient compte de la densité du matériau de la nappe de montage (7) lors de la définition de la longueur nécessaire pour le morceau de matériau du caisson.

14. Dispositif selon la revendication 13, dans lequel un dispositif pour peser la nappe de montage est prévu pour déterminer la densité du matériau de la nappe de montage (7).

15. Dispositif selon l'une quelconque des revendications 12 à 14, dans lequel la station pour joindre du morceau de matériau coupé à longueur et formé est une station de soudage.

16. Dispositif selon l'une quelconque des revendications 12 à 14, dans lequel la station pour joindre le morceau de matériau coupé à longueur et formé est une station de brasage.
